# NEUE EUROPÄISCHE PATENTSCHRIFT

(11) **EP 0 475 260 B2**
(45) Veröffentlichungstag und Bekanntmachung des Hinweises auf die Entscheidung über den Einspruch: **30.01.2002**
(45) Hinweis auf die Patenterteilung: 10.12.1997
(21) Anmeldenummer: 91114910.2
(22) Anmeldetag: 04.09.1991
(51) Int. Cl.: C08L 67/06

(54) **Ungesättigte härtbare Polyesterharzmassen mit verringerter Styrolemission und verbesserter Eigenhaftung auf ihrer ausgehärteten Masse**
Curable unsaturated polyester resin composition having low styrene emission and improved self-adhesion on its cured surface
Composition de résine de polyester insaturé durcissable à libération réduite de styrène et à pouvoir d'auto-adhésion amelioré sur sa composition durcie

(30) Priorität: 08.09.1990 DE 4028628
(43) Veröffentlichungstag der Anmeldung: 18.03.1992
(73) Patentinhaber: Solutia Germany GmbH & Co. KG, 55252 Mainz-Kastel (DE)
(72) Erfinder: Siegberg, Reinhold, W-6240 Königstein 4 (DE); Schik, Jens-Peter, Dr. Dipl.-Chem., W-6200 Wiesbaden (DE)

(56) Entgegenhaltungen:
- DE-A- 3 020 658
- US-A- 4 918 120
- Römpp Chemie-Lexikon, Achte Auflage, Franckh'sche Verlagshandlung, Stuttgart, 1987, Seite 3321.
- Chemical Abstracts, Vol. 111, no. 234 326 & PL-A-249 823
- Chemical Abstracts, Vol. 112, no. 21 754 & PL-A-249 822
- Encyclopedia of Polymer Science and Engineering, Supplement Volume, John Wiley & Sons, 1989, pages 66-67
- Handbook of Chemistry and Physics, 66th ed. 1985/86, page C-710
- Römpp Chemie Lexikon, 6.Auflage, 1966, S. 6767
- Römpp Chemie Lexikon, 9.Auflage, 1990, Seiten 1196 u.1339
- Ullmann's Encyclopedia of Industrial Chemistry, 4. Auflage, Bd. 10, Epoxidverbindungen, S.563, 567
- Ullmann's Encyclopedia of Industrial Chemistry, 5. Ed., Vol. 9, Epoxidverbindungen, p. 547, 556
- Lee and Neville, Epoxy Resins, Reprint 1982, pages 5-18, and 5-19

## Beschreibung

Die Erfindung betrifft flüssige, härtbare und monomeres Styrol enthaltende ungesättigte Polyesterharzmassen, die spezifisch wirkende Additivkombinationen enthalten, mit verringerter Styrolemission während der Verarbeitung in offenen Formen und verbesserter Eigenhaftung auf ihrer ausgehärteten Masse nach längerer Verarbeitungsunterbrechung.

Reaktionsharzmassen aus ungesättigten Polyesterharzen (UP-Harzen), monomerem Styrol, Katalysatoren, Reaktionsbeschleunigern, gegebenenfalls Zusatzstoffen und gegebenenfalls Additiven zur Reduzierung der Styrolverdunstung während der Verarbeitung werden bekanntlich seit langem zur Herstellung von Formkörpern und Beschichtungen, zum Beispiel für Laminierverfahren, Faserspritzverfahren oder Handauflegeverfahren, z.B. mit Verstärkungsmaterialien, verwendet. Ein wichtiges Einsatzgebiet für UP-Harze ist z.B. die Herstellung von naturfaserverstärkten, glasfaserverstärkten, textilfaserverstärkten oder synthesefaserverstärkten duroplastischen Kunststofformkörpern, wie sie beim Bootsbau, für Fassadenabdeckungen, als Fahrzeugkarosserieteile, als Flugzeugbauteile oder beim Behälterbau und für zahlreiche weitere technische Artikel Verwendung finden. Bei allen hierbei praktizierten offenen Verfahrensweisen zur Verarbeitung von reaktiven UP-Harzmassen, wie z.B. beim Handauflegeverfahren z.B. mit Textilglasmatten, beim Faserspritzen, beim Faserwickeln und beim Profilziehen ist es kaum zu vermeiden, daß monomeres Styrol aus den Reaktionsharzmassen vor und während deren Verarbeitung und auch noch bei der Gelierung und anschließenden Härtung der Massen in die Umgebung entweicht.

Aufgrund der jüngeren, u.a. am Umweltschutz und der Sicherheit am Arbeitsplatz orientierten Gesetzgebung ist es in den meisten Industrieländern kaum noch möglich, ohne besonderen Arbeitsplatzschutz ungesättigte reaktive Polyesterharze in offenen Verfahrensweisen zu verarbeiten. In der Bundesrepublik Deutschland wurden in diesem Zusammenhang u.a. die maximale Arbeitsplatzkonzentration (MAK) für Styrol von 100 ppm auf 20 ppm heruntergesetzt und die Verarbeiter styrolhaltiger UP-Harze erhalten von der Gewerbeaufsicht entsprechend strenge Auflagen.

Um einen Styrol-MAK-Wert von 20 ppm einhalten zu können, sind für den Fachmann u.a. zwei Möglichkeiten erkennbar, wenn man unterstellt, daß ein permanenter Personenselbstschutz durch Maske mit Filter auf Dauer nicht tragbar ist. Eine der Möglichkeiten kann in der Verwendung styrolärmerer UP-Harze oder aber in der Verwendung von Harzkombinationen, die weniger Styrol emittieren, gesehen werden. Die andere Möglichkeit kann in einer stärkeren Be- und Entlüftung der Arbeitsräume gesehen werden, um die geforderte niedrige MAK von Styrol in der Arbeitsplatzluft zu gewährleisten. Dieser letzteren Möglichkeit sind jedoch behördlich festgelegte Grenzen gesetzt, da die Abluft nur begrenzte Maximalmengen an Styrol enthalten darf. Folglich orientieren sich die meisten Bemühungen zur Lösung des Problems an der ersteren Möglichkeit, nämlich die Styrolemission aus den reaktiven UP-Harzen bei deren Verarbeitung möglichst niedrig halten zu können. So war bereits bekannt, daß Reaktionsharzmassen auf Basis von UP-Harzen an der Luft infolge von Luftinhibierung nicht klebfrei aushärten sondern klebrige Oberflächen bilden. Aus der DE-PS 948 816 war ferner bekannt, daß diese Luftinhibierug durch Zusatz von geringen Mengen wachsartiger Stoffe, wie z. B. Paraffin, Ceresin, Montanwachs, Esterwachs, die an der Umsetzung nicht teilnehmen und auf der Oberfläche der reaktiv härtenden Massen eine luftabschließende Haut bilden, vermieden werden kann. Diese wachsartigen Stoffe bewirken gleichzeitig auch eine starke Verringerung der Styrolemission aus den reaktiven UP-Harzen bei deren Verarbeitung. Dabei stellte es sich aber als großen Nachteil heraus, daß insbesondere bei der Verwendung von wachsartigem Paraffin durch den auf der gehärteten Harzoberfläche entstehenden dünnen Paraffinfilm nach längerer Unterbrechung der Laminierarbeit eine Haftung weiterer UP-Harzschichten auf der gehärteten eigenen Harzmasse nicht mehr möglich ist. Gegebenenfalls muß die Oberfläche der gehärteten Masse vor deren weiterer Beschichtung mit grobem Schleifpapier bearbeitet und vollflächig aufgerauht werden. Es hat daher nicht an Bemühungen gefehlt, die hier aufgetretene Problematik aufzuzeigen und zu analysieren, wie u.a. der Zeitschrift Kunststoffe 74 (1984) Heft 8, Seiten 464-467 entnommen werden kann.

Aus der EP-OS 0 339 171-A1 ist die Verwendung von (C₂-C₄)-Alkoholen zur Verminderung der Styrolemission aus reaktiven UP-Harzmassen bekannt. Bezüglich der Eigenhaftung von (C₂-C₄)-Alkohole enthaltenden UP-Harzen auf ihren ausgehärteten Massen nach längerer Verarbeitungsunterbrechung kann der Druckschrift jedoch nichts entnommen werden.

In EP-A 0 369 683 werden Styrol-haltige härtbare Polyesterharzmassen mit Acrylsäurealkylestern als Haftvermittler unter Zusatz eines Stabilisators vorgeschlagen.

Gemäß Chemical Abstracts, Vol. 111, No. 234 326 und Chemical Abstracts, Vol. 112, No. 21 754 kann in härtbaren Polyesterharzmassen die Styrol-Emission durch Einsatz von Bisphenol A/Epichlorhydrin-Harz und gesättigten Fettsäuren reduziert werden. Die Problematik der Eigenhaftung wird auch in diesen Druckschriften nicht angesprochen.

Der Erfindung lag somit die Aufgabe zugrunde, die bei längerer Arbeitszeitunterbrechung auftretenden schädlichen und in hohem Ausmaß qualitätsmindernden Zwischenhaftungsnachteile bzw. Eigenhaftungsnachteile auf der eigenen ausgehärteten Masse zu überwinden und reaktive UP-Harze verfügbar zu machen, bei deren Verarbeitung in offenen Formen einerseits die Festsetzungen der MAK-Verordnung für Styrol erfüllbar sind und andererseits bei der Herstellung von Formkörpern, Laminaten oder Beschichtungen auch nach längerer Unterbrechung der Verarbeitung keine Beeinträchtigung der Zwischenhaftung bzw. der Eigenhaftung auf der Oberfläche ihrer bereits ausgehärteten Massen auftritt.

Es wurde nun überraschenderweise gefunden, daß die gestellte Aufgabe durch die Verwendung spezieller erfindungsgemäßer Additivkombinationen gelöst werden kann und dadurch Verarbeitungsunterbrechungen bis zu einer Woche oder länger schadlos möglich sind.

Gegenstand der Erfindung sind daher flüssige, härtbare ungesättigte Polyesterharzmassen mit verbesserter Eigenhaftung auf der Oberfläche ihrer bereits ausgehärteten Masse nach längerer Verarbeitungsunterbrechung, enthaltend mindestens ein ungesättigtes, copolymerisationsfähiges Polyesterharz, Styrol, Katalysator, Reaktionsbeschleuniger und ein Additiv zur Verringerung der Styrolemission während der Verarbeitung in offenen Formen zu gehärteten Formkörpern oder Beschichtungen, dadurch gekennzeichnet, daß die reaktiven Massen eine Additivkombination A + B aus
0,2 bis 1 gew.-%, bezogen auf das ungesättigte Polyesterharz, A) mindesens einer wachsartigen Substanz mit einem Schmelzpunkt < 120°C, aus der Gruppe Paraffinwachs, Polyethylenwachs, Esterwachs, Fettsäure/Fettalkoholwachs, Montanwachs, Bienenwachs oder Camaubawachs und 0,5 bis 5 gew.-%, bezogen auf das ungesättigte Polyesterharz, B) mindestens eines mit Ricinisöl oder Leinsamenöl modifizierten flüssigen Epoxidharzes auf Basis von Bisphenol A / Epichlorhydrin mit einem Epoxidäquivalent gewicht von 400 bis 500 enthalten.

Bevorzugte wachsartige Additivkomponenten A sind Paraffinwachse mit einer Schmelztemperatur im Bereich von 52 bis 56°C, Polyethylenwachse mit einer Erweichungstemperatur von < 120°C, Palmitylpalmitat, Cetyl/Stearyl-stearat, Bienenwachs, Camaubawachs, Montanwachs mit einer Schmelztemperatur im Bereich von 75 bis 100°C. Besonders bevorzugt sind Palmitylpalmitat und Cetyl/ Stearyl-stearat.

Additivkomponenten B auf modifizierter Epoxidharzbasis sind durch Umsetzung mit Ricinusöl bzw. mit Leinsamenöl unter interner Weichmachung modifizierte flüssige Epoxidharze auf der Basis von Bisphenol A/Epichlorhydrin mit einem Epoxid-Äquivalentgewicht im Bereich von 400 bis 500, insbesondere mit Ricinusöl modifizierte Epoxidharze.

Die Einsatzmengen der Additivkombination A + B betragen bei den wachsartigen Additivkomponenten A 0,2 bis 1 Gew.-%, insbesondere 0,4 bis 0,8 Gew.-%, besonders bevorzugt 0,6 Gew.-%, bezogen auf das ungesättigte copolymerisationsfähige Polyesterharz. Bei den Additivkomponenten B betragen die Einsatzmengen der modifizierten Epoxidharze 0,5 bis 5 Gew.-%, insbesondere 0,8 bis 4 Gew.-%, besonders bevorzugt 1 bis 2 Gew.-%, jeweils bezogen auf das ungesättigte, copolymerisationsfähige Polyesterharz.

Das Einmischen der Additivkombination A + B in die UP-Harzmasse kann vor der Katalysatorzugabe einzeln oder gemeinsam, vorzugsweise unter Erwärmen, erfolgen. Eine besondere Verfahrensvariante besteht darin, daß man die Komponenten A + B im Styrolanteil der Harzmasse löst oder dispergiert, gegebenenfalls unter Erwärmen, und in gelöster oder dispergierter Form in dem UP-Harz homogen verteilt.

Während überraschenderweise nur erfindungsgemäße Additivkombinationen A + B die gewünschte Verbesserung der Eigenhaftung bzw. Zwischenhaftung der reaktiven UP-Harze auf Oberflächen ihrer bereits ausgehärteten Massen nach längeren Verarbeitungsintervallen, beispielsweise nach einer Woche oder länger, zeigen, kann bei separater Einzelanwendung der Additivkomponenten eine solche Wirksamkeit nicht beobachtet werden. Dies läßt vermuten, daß bei den erfindungsgemäßen Additivkombinationen A + B eine synergistische Wirksamkeitsentfaltung der beiden Komponenten A + B vorliegt, deren Zustandekommen nicht aus dem Stand der Technik herleitbar ist.

Ungesättigte Polyesterharze (UP-Harze) lassen sich bekanntlich mit einem oder mehreren polymerisationsfähigen Ethylenderivaten unter Verwendung von Peroxiden als Katalysatoren, gegebenenfalls unter Zusatz eines Beschleunigers, radikalisch copolymerisieren, vorzugsweise zu duroplastischen Polymerisaten. Als Ethylenderivate können beispielsweise Styrol oder Methacrylsäuremethylester dienen. Vorzugsweise wird Styrol verwendet, gegebenenfalls unter anteilsweiser Mitverwendung von Methacrylsäuremethylester.

Die üblicherweise verwendeten UP-Harze können aus zwei- oder mehrwertigen Carbonsäuren und zwei- oder mehrwertigen Alkoholen unter Esterbildung hergestellt werden, wobei mindestens eine der Komponenten ethylenisch ungesättigt sein muß. Als Carbonsäurekomponenten kommen dabei z.B. Maleinsäure, Fumarsäure, Maleinsäureanhydrid, Phthalsäure, Terephthalsäure, Tetrahydrophthalsäure, Hexahydrophthalsäure, Hexachloroendomethylentetrahydrophthalsäure, Bernsteinsäure, Adipinsäure, Sebacinsäure, Trimellithsäure, Muconsäure und als Alkohole beispielsweise Ethylenglykol, Diethylenglykol, Propylenglykol, Dipropylenglykol, 1,2-Butandiol, 1,3-Butandiol, 2,3-Butandiol, 1,4-Butandiol, Hexandiol, Neopentylglykol, Bisphenolhydroxyalkylether und Trimethylolpropan infrage. Die nach bekannten Methoden hergestellten UP-Harze werden in copolymerisationsfähigen Monomeren, vorzugsweise in Styrol oder in Methylmethacrylat oder in Gemischen aus Styrol und Methylmethacrylat gelöst, wobei der Anteil an diesen Monomeren in der reaktiven UP-Harzmasse nicht kritisch und in einem weiten Bereich variabel ist und u.a. von dem gewünschten Eigenschaftsspektrum des herzustellenden Duroplasten abhängt. Vorzugsweise liegt er jedoch im Bereich von 25 bis 47 Gew.-% Monomerenanteil, bezogen auf die gesamte reaktive UP-Harzmasse (einschließlich Styrol und gegebenenfalls Methylmethacrylat).

Als Polymerisations- bzw. Härtungskatalysatoren können in den reaktiven UP-Harzmassen übliche, u.a. auf die gewünschte Härtungstemperatur abzustimmende Peroxide in üblichen Aufwandmengen verwendet werden, wie z.B. Benzoylperoxid, Lauroylperoxid, tertiäres Butylperoxid, Oxyhydroperoxydicyclohexylperoxid, Methylethylketonperoxid, und als Reaktionsbeschleuniger in organischen Lösungsmitteln oder Weichmachern lösliche Aminverbindungen oder Metallsalze, wie z.B. Naphthenate des Eisens, Kobalts oder Mangans. Die reaktiven flüssigen UP-Harzmassen können ferner Thixotropierungsmittel sowie Pigmente und/oder Füllstoffe und/oder Fasermaterialien und/oder flammhemmende Zusätze enthalten.

Gegenstand der Erfindung ist ferner ein Verfahren zur Herstellung erfindungsgemäßer flüssiger, härtbarer und Styrol enthaltender reaktiver ungesättigter Polyesterharzmassen mit verringerter Styrolemission und verbesserter Eigenhaftung auf der Oberfläche ihrer bereits ausgehärteten Massen nach längerer Verarbeitungsunterbrechung, enthaltend mindestens ein ungesättigtes, copolymerisationsfähiges Polyesterharz, Styrol, Katalysator, Reaktionsbeschleuniger, Additiv, gegebenenfalls Pigmente, gegebenenfalls Füllstoffe, gegebenenfalls Faserstoffe, durch intensives Vermischen der Komponenten zu homogenen Lösungen oder dispersen Mischungen mit homogener Verteilung der Komponenten sowie Einmischen der vorstehend beschriebenen erfindungsgemäßen Additivkombination A + B in einer wirksamen Menge und deren homogene Verteilung in der flüssigen Harzmasse in gelöster oder feindisperser Form, vorzugsweise in gelöster Form.

Gegenstand der Erfindung ist auch die Verwendung erfindungsgemäßer flüssiger, härtbarer und Styrol enthaltender reaktiver ungesättigter Polyesterharzmassen mit wirksamen Gehalten an der vorstehend beschriebenen erfindungsgemäßen Additivkombination A + B zur Verringerung der Styrolemission und zur Verbesserung der Eigenhaftung auf Oberflächen ihrer bereits ausgehärteten Massen nach längerer Verarbeitungsunterbrechung zur Herstellung von duroplastischen Formkörpem, Formkörperlaminaten, Laminatbeschichtungen, faserverstärkten Formkörpern und faserverstärkten Beschichtungen sowie die nach der Härtungsreaktion resultierenden duroplastischen Formkörper, Formkörperlaminate, Laminatbeschichtungen, faserverstärkten Formkörper und faserverstärkten Beschichtungen.

Weiterer Gegenstand der Erfindung ist die Verwendung erfindungsgemäßer Additivkombinationen A + B in wirksamen Mengen in flüssigen, härtbaren und Styrol enthaltenden reaktiven ungesättigten Polyesterharzmassen zur Verringerung der Styrolemission bei der Verarbeitung der Massen zu duroplastischen Polymerisaten und zu r Verbesserung der Eigenhaftung bzw. Zwischenhaftung auf Oberflächen ihrer bereits ausgehärteten Massen nach längerer Verarbeitungsunterbrechung.

Die Erfindung wird durch die nachstehenden Beispiele näher erläutert.

### Beispiele 1 bis 5

Messung der Styrolverdunstung bei der Härtung von reaktivem styrolhaltigem UP-Harz und Prüfung der Zwischenhaftung auf ausgehärteten UP-Harzoberflächen nach längerer Verarbeitungsunterbrechung.

In den Beispielen 1 bis 5 und den Vergleichsbeispielen 1 bis 7 wird als Basisharz ein handelsübliches UP-Harz, das ca. 57 gew.%-ig in Styrol vorliegt und unter der Bezeichnung ®Alpolit UP 242 (Hersteller: Hoechst AG) erhältlich ist, verwendet. Das Produkt stellt ein vorbeschleunigtes und schwach thixotrop eingestelltes ungesättigtes Polyesterharz mit mittlerer Reaktivität dar, das keine die Styrolverdunstung hemmenden Additive enthält.

Für die Härtungsversuche werden den einzelnen UP-Harzproben nach erfolgter Zugabe der Additivkomponenten jeweils 1 Gew.-%, bezogen auf das handelsübliche UP-Harzprodukt, handelsübliches 50 gew.-%iges Methylethylketonperoxid als Härtungskatalysator beigemischt und homogen verteilt, so daß eine Verarbeitungszeit des reaktiven UP-Harzes bei 20°C von 35 bis 40 Minuten resultiert.

Die auf ihre Wirksamkeit zu prüfenden Additivkomponenten werden unter vergleichbaren Bedingungen der UP-Harzmasse jeweils vor der Zugabe des Härtungskatalysators zugesetzt und homogen eingemischt, gegebenenfalls unter Erwärmung der UP-Harzmasse. Die Verarbeitung der einzelnen Proben zur Herstellung von gehärteten Formkörpern, gegebenenfalls unter Mitverwendung von Textilglasmatten, erfolgt jeweils unmittelbar nach dem Einmischen des Härtungskatalysators in die UP-Harzmasse bei 20°C.

Zur Ermittlung der Styrolverdunstung aus der reaktiven UP-Harzmasse während der Härtungsreaktion in einer offenen Gießform werden jeweils Proben von 50 g reaktiver UP-Harzmasse, denen jeweils die in den Beispielen 1 bis 5 angegebenen Additivkombinationen A + B bzw. die in den Vergleichsbeispielen 1 bis 7 angegebenen Additivkomponenten beigemischt sind, unter vergleichbaren Bedingungen bei 20°C auf einen runden Blechdeckel mit 196 cm² Oberfläche und einer 5 mm hohen äußeren Umrandung gegossen, gewogen und dann 2 Stunden lang an der offenen Luft stehen gelassen. Nach 2 Stunden werden die Proben erneut gewogen und die Gewichtsdifferenz als Maß für die Styrolverdunstung ermittelt. Die Styrolverdunstung aus der offenen Harzoberfläche innerhalb von 2 Stunden wird in g/ m² Styrol (= g verdunstetes Styrol pro m² offener Harzoberfläche innerhalb von 2 h) angegeben und ist in der Tabelle 1 für die geprüften Proben zusammengefaßt wiedergegeben.

Zur Bestimmung der Eigenhaftung der reaktiven UP-Harzmassen auf ihrer bereits ausgehärteten Masse nach Verarbeitungsunterbrechungen wird folgende Methode an entsprechend hergestellten Laminatprüfkörpern aus Textilglasmatten und reaktiven UP-Harzmassen, denen jeweils die zu prüfenden erfindungsgemäßen Additivkombinationen A + B bzw. einzelne Additivkomponenten beigemischt worden sind, angewandt.

Es wird zunächst ein Laminat aus zwei Lagen einer Textilglasmatte, deren Eigengewicht 450 g/m² beträgt, mit reaktiver und die zu prüfenden Additivkomponenten enthaltender UP-Harzmasse hergestellt und ausgehärtet. Nach der Härtung läßt man verschiedene Proben dieses Laminats unterschiedlich lange bei Raumtemperatur ruhen und führt dann den Laminiervorgang unter Auflaminieren von jeweils zwei weiteren Lagen aus Textilglasmatte vom Eigengewicht 450 g/m² mit reaktiver und die jeweiligen Additivkomponenten enthaltender UP-Harzmasse fort. Der Glasfasergehalt in den resultierenden Laminatprüfkörpern, die jeweils insgesamt 4 Lagen Textilglasmatten enthalten, beträgt 25 bis 30 Gew.-%, bezogen auf die fertigen und ausgehärteten Prüfkörper.

In einer parallelen Versuchsreihe wird auf das Ausgangslaminat aus zwei Lagen Textilglasmatte von 450 g/m² Eigengewicht und reaktiver UP-Harzmasse nach der Aushärtung zunächst noch aus derselben reaktiven UP-Harzmasse eine Versiegelungsschicht auf die ausgehärtete Laminatoberfläche aufgebracht und ausgehärtet, was sich nach der nachfolgend jeweils eingehaltenen Verarbeitungsunterbrechung erschwerend auf die Zwischenhaftung der folgenden Laminatschicht bei der Weiterlaminierung auswirkt.

Bei allen Prüfkörpern wird nach der ersten Schicht aus zwei Lagen Textilglasmatte und reaktiver UP-Harzmasse nach der Aushärtung auf der Oberfläche eines endständigen Teilbereichs des Prüfkörpers eine Trennfolie z.B. aus einem perfluorierten Vinylpolymeren mit einlaminiert, um an dieser Stelle für die spätere Zwischenschichthaftungsprüfung die beiden Laminatschichten durch Eintreiben eines Keils auseinanderdrücken und für den Zerreißtest mechanisch fassen zu können.

Die Beurteilung der Laminatzwischenhaftungsfestigkeit beim Auseinanderreißen der beiden jeweils unter vergleichbaren Bedingungen ausgehärteten Laminatschichten erfolgt nach einer Punktebewertungsskala mit den Ziffern 1 bis 6, wobei die Ziffer 1 bedeutet, daß die Trennung der beiden Laminatschichten nur mit hohem Kräfteaufwand möglich ist und die Glasfasern dabei aus den Laminatschichten herausgerissen werden, die Haftung der beiden in zeitlichem Abstand aufeinanderlaminierten Kontaktschichten aufeinander bzw. aneinander aber weitgehend den Cohäsionswiderstand von ohne Verarbeitungsunterbrechung gehärteter UP-Harzmasse erreicht.

Bei einer Zuordnung der Ziffer 6 ist dagegen überhaupt keine Zwischenhaftung feststellbar und die beiden Laminathälften sind an ihrer Kontaktfläche ohne besonderen Kräfteaufwand vollständig voneinander zu trennen. Bei den zwischen den Ziffern 1 und 6 liegenden Bewertungen sind mit prozentual steigendem Flächenanteil kleinere Teilflächen bzw. bei höheren Ziffern zunehmend größere Teilflächen zu erkennen, bei denen keine feste Haftung zwischen den Laminatschichten gegeben ist. Das Ergebnis der durchgeführten Prüfungen ist in der Tabelle 1 zusammengefaßt wiedergegeben.

Die in den Beispielen 1 bis 5 sowie in den Vergleichsbeispielen 1 bis 7 geprüften Additivkomponenten werden in den angegebenen Mengen (Gew.-% Additivkomponente, bezogen auf die eingesetzte Menge UP-Harz Alpolit UP 242) in dem Ausgangs-UP-Harz Alpolit UP 242 vor der bei 20°C erfolgenden Zugabe des Härtungskatalysators homogen verteilt (vorzugsweise unter Erwärmung gelöst oder gegebenenfalls feindispers verteilt). Nach der Zugabe des Härtungskatalysators (1 Gew.-% Methylethylketonperoxid (50 gew.-%ig), bezogen auf das UP-Harz Alpolit UP 242) besitzen die jeweils resultierenden reaktiven UP-Harzmassen bei 20°C eine offene Verarbeitungszeit von 35 bis 40 Minuten und werden sogleich verarbeitet.

Art und Mengen der in den Beispielen verwendeten Additivkomponenten sind in der Tabelle 1 zusammengefaßt wiedergegeben, ebenso die Ergebnisse aus den Prüfungen der Styrolverdunstung und der Bewertung der LaminatZwischenhaftung. Die Ergebnisse zeigen die überraschend gute und vorteilhafte Wirksamkeit erfindungsgemäßer Additivkombinationen A + B.

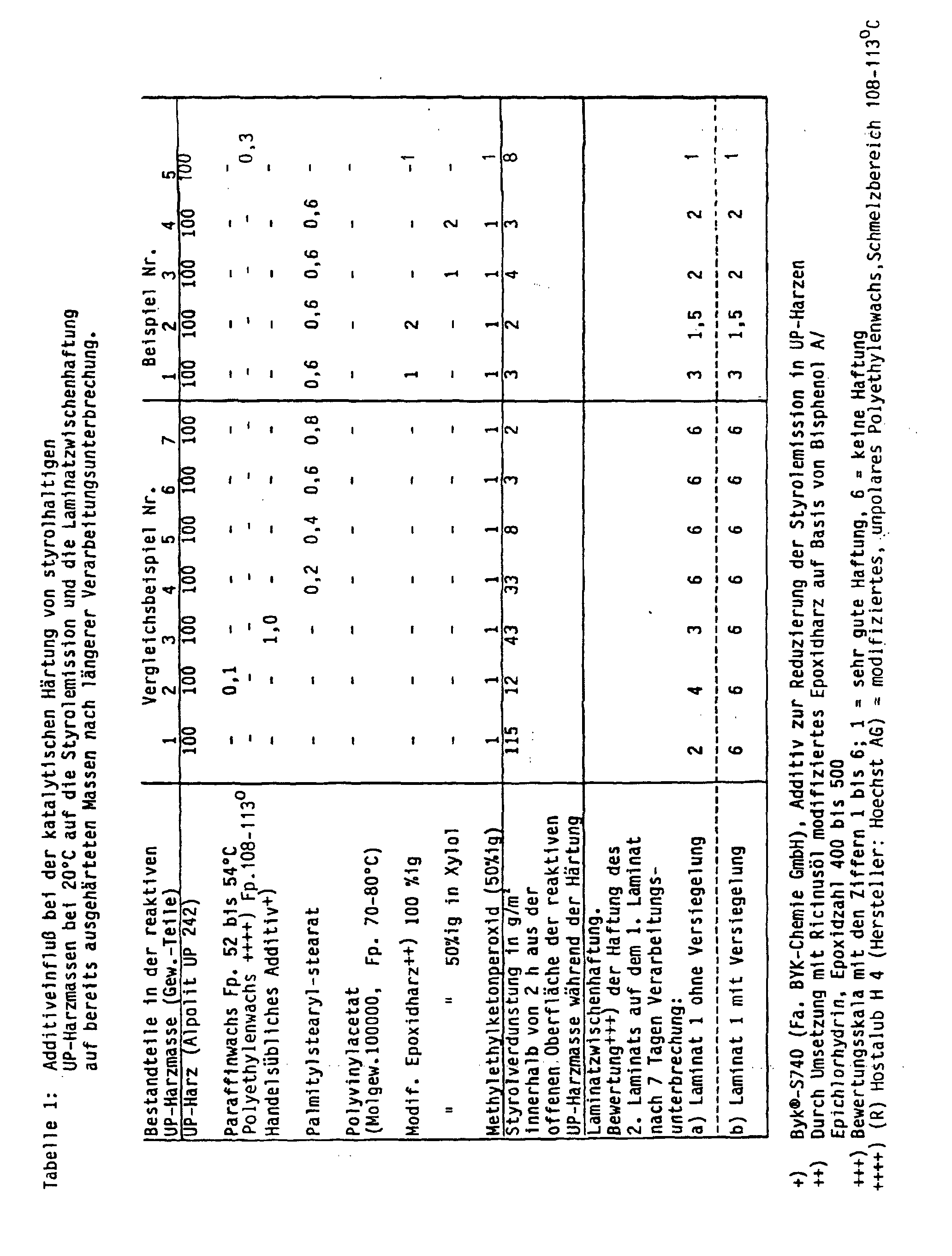

## Patentansprüche (Patentansprüche für folgende(n) Vertragsstaat(en): DE, GB, FR, IT, NL, SE, LI/CH, BE, AT, LU, GR, DK)

1. Flüssige, härtbare ungesättigte Polyesterharzmassen mit verbesserter Eigenhaftung auf der Oberfläche ihrer bereits ausgehärteten Masse, enthaltend mindestens ein ungesättigtes, copolymerisationsfähiges Polyesterharz, Styrol und gegebenenfalls Methylmethacrylat, Katalysator und ein Additiv zur Verringerung der Styrolemission während der Verarbeitung in offenen Formen zu gehärteten Formkörpern oder Beschichtungen, **dadurch gekennzeichnet, daß** die reaktiven Massen als Additiv eine Additivkombination A + B aus
A) 0,2 bis 1 Gew.-%, bezogen auf das ungesättigte, copolymerisationsfähige Polyesterharz, mindestens einer wachsartigen Substanz mit einem Schmelzpunkt < 120 °C aus der Gruppe Paraffinwachs, Polyethylenwachs, Esterwachs, Fettsäure/Fettalkoholwachs, Montanwachs, Bienenwachs oder Carnaubawachs und
B) 0,5 bis 5 Gew.-%, bezogen auf das ungesättigte, copolymerisationsfähige Polyesterharz, mindestens eines mit Riciniusöl oder Leinsamenöl modifizierten flüssigen Epoxidharzes auf Basis von Bisphenol A/Epichlorhydrin mit einem Epoxidäquivalentgewicht von 400 bis 500
enthalten.

2. Härtbare Massen nach Anspruch 1, **dadurch gekennzeichnet, daß** sie die Additivkomponente A in einer Menge von 0,4 bis 0,8 Gew.-%, insbesondere 0,6 Gew.-%, und die Additivkomponente B in einer Menge von 0,8 bis 4 Gew.-%, insbesondere 1 bis 2 Gew.-%, jeweils bezogen auf das ungesättigte, copolymerisationsfähige Polyesterharz, enthalten.

3. Härtbare Massen nach Anspruch 1 oder 2, **dadurch gekennzeichnet, daß** sie als Additivkomponente A ein Paraffinwachs mit einem Schmelzpunkt im Bereich von 52 bis 56 °C, ein Polyethylenwachs mit einer Erweichungstemperatur von < 120 °C oder ein Esterwachs, vorzugsweise Palmitylpalmitat oder Cetyl/Stearylstearat enthalten.

4. Härtbare Massen nach einem oder mehreren der Ansprüche 1 bis 3, **dadurch gekennzeichnet, daß** sie zusätzlich anorganische oder organische Pigmente, Farbstoffe, Zuschlagstoffe, flammhemmende Stoffe, Füllstoffe, anorganische oder organische Fasern oder Faserstoffe enthalten.

5. Verwendung der flüssigen, härtbaren ungesättigten Polyesterharzmassen, hergestellt nach einem oder mehreren der Ansprüche 1 bis 4, zur Herstellung von duroplastischen Formkörpern oder glasfaserverstärkten bzw ein- oder mehrfach glasfaserlaminierten Formteilen oder Werkstoffen, Gießharzformstoffen, Kunstharzbeton, Kunstharzmarmor, Kunstharzfußböden, Kunstharzspachtelmassen, glasfaser- oder synthesefaserverstärkten bzw. laminierten Formkörpern wie Bootskörper, Fahrzeugkarosserieteile, Flugzeugbauteile, Rohre, Flüssigkeitsbehälter, Bedachungsplatten, Fassadenplatten oder Transportbehälter.

6. Duroplastische Formkörper, hergestellt unter Verwendung von flüssigen, härtbaren ungesättigten Polyesterharzmassen nach einem oder mehreren der Ansprüche 1 bis 4 bzw. erhalten nach Anspruch 5.

## Patentansprüche (Patentansprüche für folgende(n) Vertragsstaat(en): ES)

1. Verfahren zur Herstellung von flüssigen, härtbaren ungesättigte Polyesterharzmassen mit verbesserter Eigenhaftung auf der Oberfläche ihrer bereits ausgehärteten Masse, enthaltend mindestens ein ungesättigtes, copolymerisationsfähiges Polyesterharz, Styrol und gegebenenfalls Methylmethacrylat, Katalysator und ein Additiv zur Verringerung der Styrolemission während der Verarbeitung in offenen Formen zu gehärteten Formkörpern oder Beschichtungen, **dadurch gekennzeichnet, daß** man in die reaktiven Massen als Additiv eine Additivkombination A + B aus
A) 0,2 bis 1 Gew.-%, bezogen auf das ungesättigte, copolymerisationsfähige Polyesterharz, mindestens einer wachsartigen Substanz mit einem Schmelzpunkt < 120 °C aus der Gruppe Paraffinwachs, Polyethylenwachs, Esterwachs, Fettsäure/Fettalkoholwachs, Montanwachs, Bienenwachs oder Carnaubawachs und
B) 0,5 bis 5 Gew.-%, bezogen auf das ungesättigte, copolymerisationsfähige Polyesterharz, mindestens eines mit Riciniusöl oder Leinsamenöl modifizierten flüssigen Epoxidharzes auf Basis von Bisphenol A/Epichlorhydrin mit einem Epoxidäquivalentgewicht von 400 bis 500
einmischt.

2. Verfahren nach Anspruch 1, **dadurch gekennzeichnet, daß** man die Additivkompoennte A in einer Menge von 0,4 bis 0,8 Gew.-%, insbesondere 0,6 Gew.-%, und die Additivkomponente B in einer Menge von 0,8 bis 4 Gew.-%, insbesondere 1 bis 2 Gew.-%, jeweils bezogen auf das ungesättigte, copolymerisationsfähige Polyesterharz, einmischt.

3. Verfahren nach Anspruch 1 oder 2, **dadurch gekennzeichnet, daß** man als Additivkomponente A ein Paraffinwachs mit einem Schmelzpunkt im Bereich von 52 bis 56 °C, ein Polyethylenwachs mit einer Erweichungstemperatur von < 120 °C oder ein Esterwachs, vorzugsweise Palmitylpalmitat oder Cetyl/Stearylstearat einmischt.

4. Verfahren nach einem oder mehreren der Ansprüche 1 bis 3, **dadurch gekennzeichnet, daß** man zusätzlich anorganische oder organische Pigmente, Farbstoffe, Zuschlagstoffe, flammhemmende Stoffe, Füllstoffe, anorganische oder organische Fasern oder Faserstoffe einmischt.

5. Verwendung der flüssigen, härtbaren ungesättigten Polyesterharzmassen, hergestellt nach einem oder mehreren der Ansprüche 1 bis 4, zur Herstellung von duroplastischen Formkörpern oder glasfaserverstärkten bzw. ein- oder mehrfach glasfaserlaminierten Formteilen oder Werkstoffen, Gießharzformstoffen, Kunstharzbeton, Kunstharzmarmor, Kunstharzfußböden, Kunstharzspachtelmassen, glasfaser- oder synthesefaserverstärkten bzw. laminierten Formkörpern wie Bootskörper, Fahrzeugkarosserieteile, Flugzeugbauteile, Rohre, Flüssigkeitsbehälter, Bedachungsplatten, Fassadenplatten oder Transportbehälter.

6. Duroplastische Formkörper, hergestellt unter Verwendung von flüssigen, härtbaren ungesättigten Polyesterharzmassen nach einem oder mehreren der Ansprüche 1 bis 4 bzw. erhalten nach Anspruch 5.

## Claims (Claims for the following Contracting State(s): DE, GB, FR, IT, NL, SE, LI, CH, BE, AT, LU, GR, DK)

1. Liquid, curable, unsaturated polyester resin compositions with improved auto-adhesion to the surface of identical compositions, which are already in the cured state, comprising at least on unsaturated, copolymerizable polyester resin, styrene and, optionally, methyl methacrylate, a catalyst and an additive for reducing the styrene emission during processing in open molds into cured moldings or coatings, **characterized in that** the reactive compositions contain, as an additive, an additive combination A) + B), where
A) comprises 0.2 to 1 % by weight, relative to the unsaturated copolymerizable polyester resin, of at least one wax-type substance having a melting point of < 120 °C, selected from the group including paraffin wax, polyethylene wax, ester wax, fatty acid/fatty alcohol wax, montan wax, bees wax or carnauba wax, and
B) comprises 0.5 to 5 % by weight, relative to the unsaturated, copolymerizable polyester resin, of at least one liquid epoxide resin based on bisphenol A/epichlorohydrin, with an epoxide equivalent weight of 400 to 500, which has been modified with castor oil, or linseed oil,

2. Curable compositions as claimed in claim 1, **characterized in that** they contain the additive component A) in an amount of 0.4 to 0.8 % by weight, in particular of 0.6 % by weight, and the additive component B) in an amount of 0.8 to 0.4 % by weight, in particular of 1 to 2 % by weight, each time relative to the unsaturated, copolymerizable polyester resin.

3. Curable compositions as claimed in claim 1 or 2, **characterized in that** they contain, as the additive component A), a paraffin wax having a melting point in the range of 52 to 56 °C, a polyethylene wax having a softening temperature of < 120 °C or an ester wax, preferably palmityl palmitate or cetyl/stearyl stearate.

4. Curable compositions as claimed in one or several of claims 1 to 3, **characterized in that** they additionally contain inorganic or organic pigments, dyes, additives, flame retardants, fillers, inorganic or organic fibers or fibrous materials.

5. Use of the liquid, curable unsaturated polyester resin compositions, prepared as claimed in one or several of claims 1 to 4, for producing duroplastic moldings, shaped parts or materials reinforced by glass fibers or comprising one or several glass fiber laminate plies, cast resin moldings, synthetic resin-modified concrete, synthetic resin marble, synthetic resin floor coverings, synthetic resin putty compounds, shaped or molded parts reinforced or laminated with glass fibers or synthetic fibers, such as boat, car and aircraft bodies, pipes, tanks, roof- and wall-covering panels or transport containers.

6. Duroplastic shaped or molded products, produced using liquid, curable unsaturated polyester resin compositions as claimed in one or several of claims 1 to 4 and/or obtained as claimed in claim 5.

## Claims (Claims for the following Contracting State(s): ES)

1. A process for preparing liquid, curable, unsaturated polyester resin compositions with improved auto-adhesion to the surface of identical compositions, which are already in the cured state, comprising at least on unsaturated, copolymerizable polyester resin, styrene and, optionally, methyl methacrylate, a catalyst and an additive for reducing the styrene emission during processing in open molds into cured moldings or coatings, **characterized in that**, as an additive, an additive combination A) + B) is worked into the reactive compositions, where
A) comprises 0.2 to 1 % by weight, relative to the unsaturated copolymerizable polyester resin, of at least one wax-type substance having a melting point of < 120 °C, selected from the group including paraffin wax, polyethylene wax, ester wax, fatty acid/fatty alcohol wax, montan wax, bees wax or camauba wax, and
B) comprises 0.5 to 5 % by weight, relative to the unsaturated, copolymerizable polyester resin, of at least one liquid epoxide resin based on bisphenol A/epichlorohydrin, with an epoxide equivalent weight of 400 to 500, which has been modified with castor oil, or linseed oil.

2. The process as claimed in claim 1, **characterized in that** the additive component A) is added in an amount of 0.4 to 0.8 % by weight, in particular of 0.6 % by weight, and the additive component B) is added in an amount of 0.8 to 0.4 % by weight, in particular of 1 to 2 % by weight, each time relative to the unsaturated, copolymerizable polyester resin.

3. The process as claimed in claim 1 or 2, **characterized in that**, as the additive component A), a paraffin wax having a melting point in the range of 52 to 56 °C, a polyethylene wax having a softening temperature of < 120 °C or an ester wax, preferably palmityl palmitate or cetyl/stearyl stearate, is added.

4. The process as claimed in one or several of claims 1 to 3, **characterized in that** inorganic or organic pigments, dyes, additives, flame retardants, fillers, inorganic or organic fibers or fibrous materials, are added additionally.

5. Use of the liquid, curable unsaturated polyester resin compositions, prepared as claimed in one or several of claims 1 to 4, for producing duroplastic moldings, shaped parts or materials reinforced by glass fibers or comprising one or several glass fiber laminate plies, cast resin moldings, synthetic resin-modified concrete, synthetic resin marble, synthetic resin floor coverings, synthetic resin putty compounds, shaped or molded parts reinforced or laminated with glass fibers or synthetic fibers, such as boat, car and aircraft bodies, pipes, tanks, roof- and wall-covering panels or transport containers.

6. Duroplastic shaped or molded products, produced using liquid, curable unsaturated polyester resin compositions as claimed in one or several of claims 1 to 4 and/or obtained as claimed in claim 5.

## Revendications (Revendications pour l'(les) Etat(s) contractant(s) suivant(s): DE, GB, FR, IT, NL, SE, LI, CH, BE, AT, LU, GR, DK)

1. Compositions de résines de polyester insaturées, durcissables, liquides avec un pouvoir d'auto-adhésion amélioré à la surface de leur composition déjà durcie, contenant au moins une résine de polyester copolymérisable, insaturée, du styrène et éventuellement du méthacrylate de méthyle, du catalyseur et un additif pour réduire la libération de styrène pendant le traitement dans des moules à l'air libre pour donner des corps moulés ou des revêtements durcis, **caractérisées en ce que** les compositions réactives contiennent, en tant qu'additif, une combinaison d'additifs A + B constituée de
A) 0,2 à 1 % en poids par rapport à la résine de polyester copolymérisable, insaturée, d'au moins une substance cireuse ayant un point de fusion inférieur à 120°C, du groupe de la cire de paraffine, de la cire de polyéthylène, de la cire à esters, de la cire d'acides gras/alcools gras, de la cire montanique, de la cire d'abeille ou de la cire de camauba, et
B) 0,5 à 5 % en poids par rapport à la résine de polyester copolymérisable, insaturée, d'au moins une résine époxy liquide à base de bisphénol A/épichlorhydrine avec un poids équivalent d'époxy de 400 à 500, modifiée par l'huile de ricin, ou l'huile de graine de lin.

2. Compositions durcissables selon la revendication 1, **caractérisées en ce qu'**elles contiennent le composant d'additif A en une quantité de 0,4 à 0,8 % en poids, en particulier 0,6 % en poids et le composant d'additif B en une quantité de 0,8 à 4 % en poids, en particulier 1 à 2 % en poids, à chaque fois par rapport à la résine de polyester copolymérisable, insaturée.

3. Compositions durcissables selon la revendication 1 ou 2, **caractérisées en ce qu'**elles contiennent en tant que composant d'additif A une cire de paraffine ayant un point de fusion dans le domaine de 52 à 56°C, une cire de polyéthylène ayant une température de ramollissement inférieure à 120°C ou une cire à esters, de préférence du palmitate de palmityle ou du stéarate de cétyle/stéaryle.

4. Compositions durcissables selon une ou plusieurs des revendications 1 à 3, **caractérisées en ce qu'**elles contiennent en outre des pigments minéraux ou organiques, des colorants, des adjuvants, des matières ignifuges, des charges, des fibres non organiques ou organiques ou des matières fibreuses.

5. Utilisation des compositions de résines de polyester insaturées, durcissables, liquides préparées selon une ou plusieurs des revendications 1 à 4, pour la fabrication de corps moulés thermoplastiques, ou de préformés ou de matériaux renforcés par des fibres de verre ou respectivement stratifiés une ou plusieurs fois avec des fibres de verre, de semi-produits en résine moulée, de béton en résine synthétique, de marbre en résine synthétique, de revêtements de sol en résine synthétique, de compositions au couteau en résine synthétique, de corps moulés renforcés par des fibres de verre ou des fibres synthétiques, ou respectivement stratifiés, comme des corps de bateaux, des pièces de carrosserie de véhicules, des éléments préfabriqués d'avion, des tuyaux, des récipients pour liquides, des plaques de couverture, des plaques pour façades ou des récipients de transport.

6. Corps moulés thermoplastiques, fabriqués en utilisant des compositions de résines de polyester insaturées, durcissables, liquides, selon une ou plusieurs des revendications 1 à 4 ou respectivement obtenus selon la revendication 5.

## Revendications (Revendications pour l'(les) Etat(s) contractant(s) suivant(s): ES)

1. Procédé de préparation de compositions de résines de polyester insaturées, durcissables, liquides avec un pouvoir d'auto-adhésion amélioré à la surface de leur composition déjà durcie, contenant au moins une résine de polyester copolymérisable, insaturée, du styrène et éventuellement du méthacrylate de méthyle, du catalyseur et un additif pour réduire la libération de styrène pendant le traitement dans des moules ouverts pour donner des corps moulés ou des revêtements durcis, **caractérisé en ce que** l'on introduit en mélange dans les compositions réactives, en tant qu'additif, une combinaison d'additifs A + B constituée de
A) 0,2 à 1 % en poids par rapport à la résine de polyester copolymérisable, insaturée, d'au moins une substance cireuse ayant un point de fusion inférieur à 120°C, du groupe de la cire de paraffine, de la cire de polyéthylène, de la'cire à esters, de la cire d'acides gras/alcools gras, de la cire montanique, de la cire d'abeille ou de la cire de camauba, et
B) 0,5 à 5 % en poids par rapport à la résine de polyester copolymérisable, insaturée, d'au moins une résine époxy liquide, à base de bisphénol A/épichlorhydrine ayant un poids équivalent d'époxy de 400 à 500, modifiée par l'huile de ricin, ou l'huile de graine de lin.

2. Procédé selon la revendication 1, **caractérisé en ce que** le composant d'additif A est introduit en mélange en une quantité de 0,4 à 0,8 % en poids, en particulier 0,6 % en poids, et le composant d'additif B en une quantité de 0,8 à 4 % en poids, en particulier 1 à 2 % en poids, dans chaque cas par rapport à la résine de polyester copolymérisable, insaturée.

3. Procédé selon la revendication 1 ou 2, **caractérisé en ce qu'**on introduit en mélange en tant que composant d'additif A une cire de paraffine ayant un point de fusion dans le domaine de 52 à 56°C, une cire de polyéthylène ayant une température d'amollissement inférieure à 120°C ou une cire à esters, de préférence du palmitate de palmityle ou du stéarate de cétyle/stéaryle.

4. Procédé selon une ou plusieurs des revendications 1 à 3, **caractérisé en ce qu'**on introduit en outre en mélange des pigments non organiques ou organiques, des colorants, des adjuvants, des matières ignifuges, des charges, des fibres non organiques ou organiques ou des matières fibreuses.

5. Utilisation des compositions de résines de polyester insaturées, durcissables, liquides préparées selon une ou plusieurs des revendications 1 à 4, pour la fabrication de corps moulés thermoplastiques, ou de préformés ou de matériaux renforcés par des fibres de verre ou respectivement stratifiés une ou plusieurs fois avec des fibres de verre, de semi-produits en résine moulée, de béton en résine synthétique, de marbre en résine synthétique, de revêtements de sol en résine synthétique, de compositions au couteau en résine synthétique, de corps moulés renforcés par des fibres de verre ou des fibres synthétiques, ou respectivement stratifiés, comme des corps de bateaux, des pièces de carrosserie de véhicules, des éléments préfabriqués d'avion, des tuyaux, des récipients pour liquides, des plaques de couverture, des plaques pour façades ou,des récipients de transport.

6. Corps moulés thermoplastiques fabriqués en utilisant les compositions de résines de polyester insaturées, durcissables, liquides, selon une ou plusieurs des revendications 1 à 4 ou respectivement obtenus selon la revendication 5.
